# EUROPEAN PATENT APPLICATION

(11) **EP 3 128 313 A1**
(43) Date of publication of application: **08.02.2017**
(21) Application number: 16162715.3
(22) Date of filing: 29.03.2016
(51) Int. Cl.: G01N 21/95, B65G 47/14

(54) **AUTOMATIC PILL INSPECTION APPARATUS**

(30) Priority: 07.08.2015 KR 20150111836
(71) Applicant: Daeyongpharmatech Co., Ltd., Gyeonggi-do 15078 (KR)
(72) Inventor: YOO, Pil Sang, 15029 Siheung-si, Gyeonggi-do (KR)
(74) Representative: Nordic Patent Service A/S

(57) **Abstract**

Provided is an automatic pill inspection apparatus including: a pill feeder (10) supplying pills (p); a pill supply unit (100) for the automatic pill inspection apparatus, aligning and transferring the pills (p) supplied from the pill feeder (10) one by one; and a pill alignment and transfer unit (200) for the automatic pill inspection apparatus, determining and transferring the pills (p) such that one side surface and the other side surface of the pill (p) are sequentially exposed. Here, the automatic pill inspection apparatus further includes: an upper side surface sensing camera (300) disposed at one side of the upper drum (210) to inspect the upper side surface of the pills (p); and a post-inversion sensing camera (310) disposed at one side of the lower drum (240) to inspect the lower side surface and the respective side surfaces of the pills (p); and the pills (p) determined as defective according to an inspection result of the upper side surface sensing camera (300) and the post-inversion sensing camera (310) are selectively released into a first supplied pill release box (330) by compressed air, and the pills (p) determined as normal are released into a normal pill release box (350).

## Description

The following disclosure relates to an automatic pill inspection apparatus. More particularly, the following disclosure relates to an automatic pill inspection apparatus including: a pill feeder (10) supplying pills (p); a pill supply unit (100) for the automatic pill inspection apparatus, aligning and transferring the pills (p) supplied from the pill feeder (10) one by one; and a pill alignment and transfer unit (200) for the automatic pill inspection apparatus, determining and transferring the pills (p) such that one side surface and the other side surface of the pill (p) are sequentially exposed,
wherein: the pill supply unit (100) for the automatic pill inspection apparatus includes: a supply guide (110) for guiding and supplying the pills (p) supplied from the pill feeder (10); a sawtooth drum (120) having pill seating grooves (121) receiving the pills (p) supplied from the supply guide (110) and continuously formed in one or more rows along an outer circumferential surface of the sawtooth drum (120); an alignment brush (130) making contact with an outer surface of the sawtooth drum (120) and pressing the pills (p) seated in the pill seating groove (121) to allow the pills (p) to be seated in the pill seating grooves (121) one by one as the sawtooth drum (120) rotates; and a cylindrical guide (140) including a rotation guide part (141) formed to be spaced away from the outer circumferential surface of the sawtooth drum (120) by a certain gap and aligning the pills (p) under the sawtooth drum (120) such that the pills (p) face a certain direction when the sawtooth drum (120) rotates, and an induction guide part (142) for guiding the pills (p) aligned toward the certain direction to an upper drum;
the pill alignment and transfer unit (200) for the automatic pill inspection apparatus includes: an upper drum (210) including a pill adsorption seating part (211) in which the pills (p) supplied from the pill supply unit (100) for the automatic pill inspection apparatus one by one while being aligned so as to face a certain direction are adsorbed and seated and which is continuously formed in one or more rows along the outer circumferential surface of the upper drum (210), and separating the pills (p) from the pill adsorption seating part (211) by compressed air under the upper drum (210); and a lower drum (240) including an inverted table adsorption seating part (241) in which the pills (p) separated from the lower side of the upper drum (210) are seated such that the undersurfaces of the pills (p) face the outside, and are seated by being adsorbed by vacuum while being exposed to the outside and which is continuously formed along the outer circumferential surface of the lower drum (240), and selectively separating the pills (p) from the inverted table adsorption seating part (241) by compressed air under the lower drum (240) while differentiating a separation location;
the automatic pill inspection apparatus further includes: an upper side surface sensing camera (300) disposed at one side of the upper drum (210) to inspect the upper side surface of the pills (p); and a post-inversion sensing camera (310) disposed at one side of the lower drum (240) to inspect the lower side surface and the respective side surfaces of the pills (p); and
the pills (p) determined as defective according to an inspection result of the upper side surface sensing camera (300) and the post-inversion sensing camera (310) are selectively released into a first supplied pill release box (330) by compressed air, and the pills (p) determined as normal are released into a normal pill release box (350).

### Background Art

Generally, a pill inspecting apparatus is used for final shipment of products after drugs such as pills and capsules undergo an exterior inspection process.

As examples of existing pill inspecting apparatuses, disclosed are many inventions including Patent Document 1 entitled "Drug Inspection Device and Drug Inspection Method (Korean Patent Application Publication No. 10-2014-0045987)" and Patent Document 2 entitled "Exterior Inspection Device for Solid Formulation (Korean Patent No. 10-0542477)".

These pill inspecting apparatuses determine whether or not a pill has a defect, through an image of pill surface obtained by photographing the pill using a camera, and need to include both surface inspection drums and a separate side surface inspection drum in order to obtain images of the both surfaces and the side surface of the pill.

Accordingly, since a plurality of cameras need to be provided in the respective inspection drums to photograph the whole exterior of the pill, there are limitations in that the whole structure is complicated and time taken for inspection becomes longer.

Also, when pills are seated in a pill reception concavity of the inspection drum, pills can be properly seated in the pill reception concavity having a circular shape only when lying flat. Accordingly, when a large number of pills needs to be inspected at one time and some pills cannot lie flat in the pill reception concavity, time taken for inspection may increase and thus the productivity may be reduced. Also, the efficiency may be reduced in regard to the overall operation of the apparatus.

Accordingly, the present disclosure provides an automatic pill inspection apparatus having a relatively simple structure, which can seat pills in a vacant pill reception concavity during the operation of an automatic pill inspection machine by including a pill supply unit in the automatic pill inspection apparatus, and can quickly inspect various sizes and shapes of pills and capsules without a loss through a pill alignment and transfer unit.

In one general aspect, an automatic pill inspection apparatus includes: a pill feeder (10) supplying pills (p); a pill supply unit (100) for the automatic pill inspection apparatus, aligning and transferring the pills (p) supplied from the pill feeder (10) one by one; and a pill alignment and transfer unit (200) for the automatic pill inspection apparatus, determining and transferring the pills (p) such that one side surface and the other side surface of the pill (p) are sequentially exposed,
wherein: the pill supply unit (100) for the automatic pill inspection apparatus includes: a supply guide (110) for guiding and supplying the pills (p) supplied from the pill feeder (10); a sawtooth drum (120) having pill seating grooves (121) receiving the pills (p) supplied from the supply guide (110) and continuously formed in one or more rows along an outer circumferential surface of the sawtooth drum (120); an alignment brush (130) making contact with an outer surface of the sawtooth drum (120) and pressing the pills (p) seated in the pill seating groove (121) to allow the pills (p) to be seated in the pill seating grooves (121) one by one as the sawtooth drum (120) rotates; and a cylindrical guide (140) including a rotation guide part (141) formed to be spaced away from the outer circumferential surface of the sawtooth drum (120) by a certain gap and aligning the pills (p) under the sawtooth drum (120) such that the pills (p) face a certain direction when the sawtooth drum (120) rotates, and an induction guide part (142) for guiding the pills (p) aligned toward the certain direction to an upper drum;
the pill alignment and transfer unit (200) for the automatic pill inspection apparatus includes: an upper drum (210) including a pill adsorption seating part (211) in which the pills (p) supplied from the pill supply unit (100) for the automatic pill inspection apparatus one by one while being aligned so as to face a certain direction are adsorbed and seated and which is continuously formed in one or more rows along the outer circumferential surface of the upper drum (210), and separating the pills (p) from the pill adsorption seating part (211) by compressed air under the upper drum (210); and a lower drum (240) including an inverted table adsorption seating part (241) in which the pills (p) separated from the lower side of the upper drum (210) are seated such that the undersurfaces of the pills (p) face the outside, and are seated by being adsorbed by vacuum while being exposed to the outside and which is continuously formed along the outer circumferential surface of the lower drum (240), and selectively separating the pills (p) from the inverted table adsorption seating part (241) by compressed air under the lower drum (240) while differentiating a separation location;
the automatic pill inspection apparatus further includes: an upper side surface sensing camera (300) disposed at one side of the upper drum (210) to inspect the upper side surface of the pills (p); and a post-inversion sensing camera (310) disposed at one side of the lower drum (240) to inspect the lower side surface and the respective side surfaces of the pills (p); and
the pills (p) determined as defective according to an inspection result of the upper side surface sensing camera (300) and the post-inversion sensing camera (310) are selectively released into a first supplied pill release box (330) by compressed air, and the pills (p) determined as normal are released into a normal pill release box (350).

The post-inversion sensing camera (310) may further include: a lower side surface sensing camera disposed at one side of the lower drum (240) to inspect the lower side surface of the pills (p); an upper side surface sensing camera disposed at an upper side of one side of the lower drum (240) to inspect the upper side surface of the pills (p); a lower side surface sensing camera disposed at a lower side of one side of the lower drum (240) to inspect the lower side surface of the pills (p); and a side surface sensing camera (311) disposed in forward and backward directions at one side of the lower drum (240) such that all images of the pills (p) are arranged and seated straight while forming a row with respect to view angles thereof, and are returned through a reflector (312) without being overlapped.

The automatic pill inspection apparatus may further include: a first vacuum application control member (220) disposed closely to the inside of the upper drum (210), including a first side surface vacuum application space part (221) to which vacuum is applied at one side surface thereof, and having a lower compressed air supply hole (223) formed at the lower side of the first side surface vacuum application space part (221); a first vacuum application hole (212) formed in the pill adsorption seating part (211) to communicate with the first side surface vacuum application space part (221); a lower compressed air supply unit (231) supplying compressed air through the lower compressed air supply hole (223) into the first vacuum application hole (212) located at a lower side of the upper drum (210) according to rotation of the upper drum (210) to separate the pills (p) from the pill adsorption seating part (211); a second vacuum application control member (250) disposed closely to the inside of the lower drum (240), including a second side surface vacuum application space part (251) to which vacuum is applied at one side surface thereof, and having a first compressed air supply hole (255) and a second compressed air supply hole (256) sequentially formed at the lower side of the second side surface vacuum application space part (251); a second vacuum application hole (244) formed in the inverted table adsorption seating part (241) to communicate with the second side surface vacuum application space part (251); a first compressed air supply unit (260) supplying compressed air through the first compressed air supply hole (255) into the second vacuum application hole (244) located at a lower side of the upper drum (210) according to rotation of the upper drum (210) to separate the pills (p) determined as defective from the inverted table adsorption seating part (241); and a second compressed air supply unit (261) supplying compressed air through the second compressed air supply hole (256) into the second vacuum application hole (244) located at a lower side of the upper drum (210) according to rotation of the upper drum (210) to separate the pills (p) determined as normal from the inverted table adsorption seating part (241). Here, the upper drum (210) and the lower drum (240) may be replaced and mounted in accordance with the size of the pills (p), and the automatic pill inspection apparatus may further include: an upper drum driving part (280) disposed on the outer circumferential surface of the first vacuum application control member (220), including a plurality of upper drum drive pins (281) inserted into upper drum drive pin insertion holes (216) formed in an upper drum flange (215) of the upper drum (210), and driving the upper drum (210) that is replaceably installed; and a lower drum driving part (290) disposed on the outer circumferential surface of the second vacuum application control member (250), including a plurality of lower drum drive pins (291) inserted into lower drum drive pin insertion holes (246) formed in a lower drum flange (245) of the lower drum (240), and driving the lower drum (240) that is replaceably installed in linkage with the upper drum (210) in the opposite direction.

The automatic pill inspection apparatus may further include: a residual pill sensor (320) sensing whether or not the pills (p) remain in the inverted table adsorption seating part (241) immediately after the pills (p) determined as defective are separated from the inverted table adsorption seating part (241); a third compressed air supply hole (257) further formed between the first compressed air supply hole (255) and the second compressed air supply hole (256); and a third compressed air supply unit (262) supplying compressed air through the third compressed air supply hole (257) into the second vacuum application hole (244) located at a lower side of the upper drum (210) according to rotation of the upper drum (210) to separate the pills (p) remaining even though determined as defective from the inverted table adsorption seating part (241).

The automatic pill inspection apparatus may further include an adsorption seating protrusion (242) disposed inside the inverted table adsorption seating part (241), having the second vacuum application hole (244) formed therein, and having an adsorption groove (243) formed thereon. Here, the upper side of the adsorption seating protrusion (242) may be formed flat at an inner side from the outer circumferential surface of the lower drum (240) by about 0.05 mm to about 0.3 mm.

The automatic pill inspection apparatus may further include a drum cleaning unit (360) disposed closely to the other side of the lower drum (240) and removing residues by spraying compressed air on the surface of the lower drum (240) from which the pills (p) are separated. Here, the drum cleaning unit (360) may include: a compressed air outlet part (361) removing residues by spraying compressed air on the surface of the lower drum (240) from which the pills (p) are separated; and a suction part (362) for sucking residues removed by compressed air sprayed from the compressed air outlet part (361) using vacuum.

The automatic pill inspection apparatus may further include: an upper compressed air supply hole (222) formed on the first vacuum application control member (220); and an upper compressed air supply unit (230) supplying compressed air into the second vacuum application hole (244) through the upper compressed air supply hole (222) to align the pills (p) in the pill adsorption seating part (211).

The automatic pill inspection apparatus may further include an alignment guide (270) disposed over the side surface of the upper drum (210) to make contact with and press the pills (p).

Other features and aspects will be apparent from the following detailed description, the drawings, and the claims.

According to an embodiment of the present invention, since the exterior of pills can be quickly inspected, the productivity can be improved. Also, all surfaces of pills can be inspected using two drums including an upper drum and a lower drum and a camera for inspecting the front and side surfaces of pills and an post-inversion sensing camera for inspecting the opposite surface and side surface of pills 360 degrees. Accordingly, the whole structure of the apparatus becomes simple and efficient, and thus products can be quickly supplied. Also, since pills can be seated in a pill reception concavity without omission, pills can be inspected at a high speed, thereby improving the efficiency of the apparatus operation and the productivity.

In addition, since the upper drum and the lower drum can be replaceably mounted in accordance with the size of pills, various sizes of pills can be inspected.

### Description of Drawings

FIG. 1 is a view illustrating the whole configuration of an automatic pill inspection apparatus according to an embodiment of the present invention;

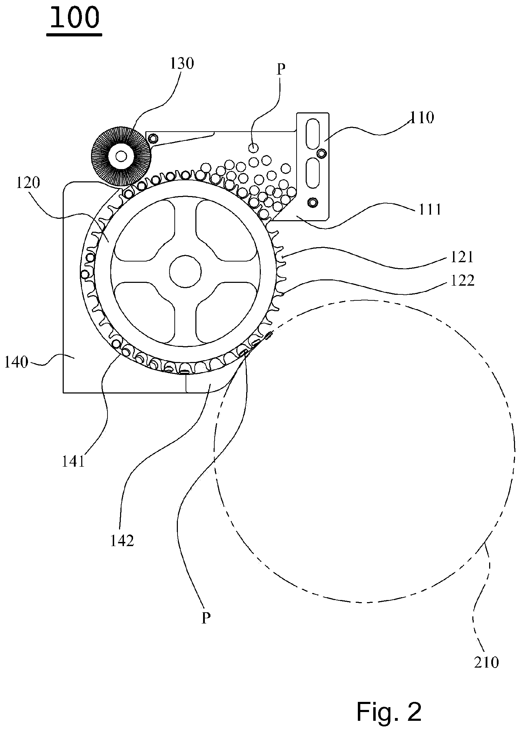

FIG. 2 is a view illustrating the configuration of a pill supply unit for an automatic pill inspection apparatus according to an embodiment of the present invention;
FIG. 3 is a view illustrating the configuration of a pill alignment and transfer unit for an automatic pill inspection apparatus according to an embodiment of the present invention;

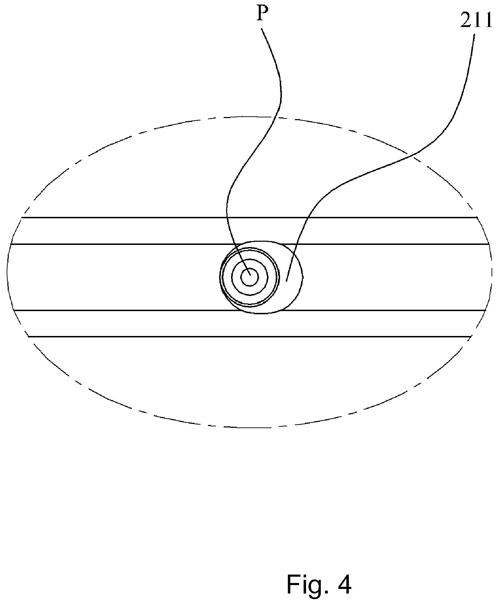

FIG. 4 is a top view illustrating the portion "A" of FIG. 3 showing an automatic pill inspection apparatus according to an embodiment of the present invention;

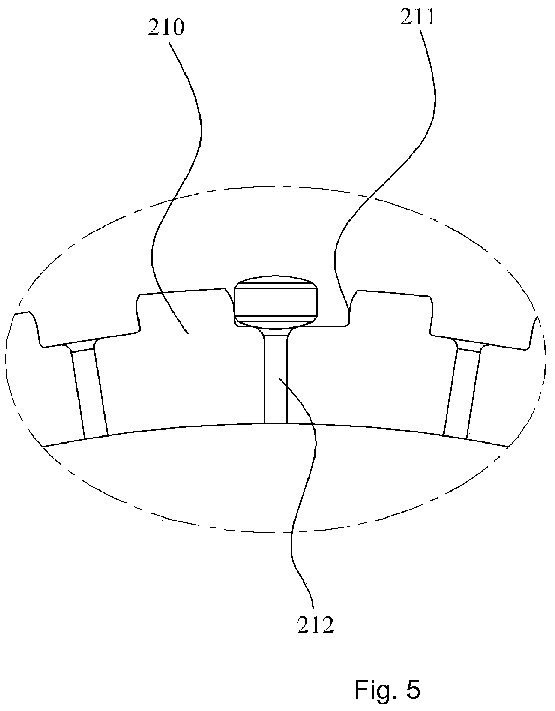

FIG. 5 is a side view illustrating the portion "A" of FIG. 3 showing an automatic pill inspection apparatus according to an embodiment of the present invention;
FIG. 6 is a side view illustrating the portion "B" of FIG. 3 showing an automatic pill inspection apparatus according to an embodiment of the present invention;
FIG. 7 is a view illustrating a replacement combination structure of an upper drum and a lower drum of an automatic pill inspection apparatus according to an embodiment of the present invention;
FIG. 8 is a side view illustrating the configuration of a drum cleaning unit of an automatic pill inspection apparatus according to an embodiment of the present invention; and
FIG. 9 is a side view illustrating a side surface sensing camera of a drum cleaning unit of an automatic pill inspection apparatus according to an embodiment of the present invention.

Reference numerals set forth in the Drawings include reference to the following elements as further discussed below:
- P:: pill
- 10:: pill feeder
- 100:: pill supply unit for automatic pill inspection apparatus
- 110:: supply guide
- 111:: supply guide part
- 120:: sawtooth drum
- 121:: pill seating groove
- 122:: sawtooth partition part
- 130:: alignment brush
- 140:: cylindrical guide
- 141:: rotation guide part
- 142:: induction guide part
- 200:: pill alignment and transfer unit for automatic pill inspection apparatus
- 210:: upper drum
- 211:: pill adsorption seating part
- 212:: first vacuum application hole
- 215:: upper drum flange
- 216:: upper drum drive pin insertion hole
- 220:: first vacuum application control member
- 221:: first side surface vacuum application space part
- 222:: upper compressed air supply hole
- 223:: lower compressed air supply hole
- 230:: upper compressed air supply unit
- 231:: lower compressed air supply unit
- 240:: lower drum
- 241:: inverted pill adsorption seating part
- 242:: adsorption seating protrusion
- 243:: adsorption groove
- 244:: second vacuum application hole
- 245:: lower drum flange
- 246:: lower drum drive pin insertion hole
- 250:: second vacuum application control member
- 251:: second side surface vacuum application space part
- 252:: first vacuum application space part
- 253:: second vacuum application space part
- 254:: vacuum application connection part
- 255:: first compressed air supply hole
- 256:: second compressed air supply hole
- 257:: third compressed air supply hole
- 260:: first compressed air supply unit
- 261:: second compressed air supply unit
- 262:: third compressed air supply unit
- 270:: alignment guide
- 280:: upper drum driving part
- 281:: upper drum drive pin
- 290:: lower drum driving part
- 291:: lower drum drive pin
- 300:: upper side surface sensing camera
- 301:: first illumination
- 310:: post-inversion sensing camera
- 311:: side surface sensing camera
- 312:: reflector
- 313:: second illumination
- 320:: residual pill sensor
- 330:: first supplied pill release box
- 340:: second supplied pill release box
- 350:: normal pill release box
- 360:: drum cleaning unit
- 361:: compressed air outlet part
- 362:: suction part

### Detailed description

Hereinafter, an automatic pill inspection apparatus according to an embodiment of the present invention will be described in detail with reference to the accompanying drawings. First, it is also noted that like reference numerals denote like elements in the drawings. For explanation of the present invention, detailed descriptions related to well-known functions or configurations will be ruled out in order not to unnecessarily obscure subject matters of the present invention.

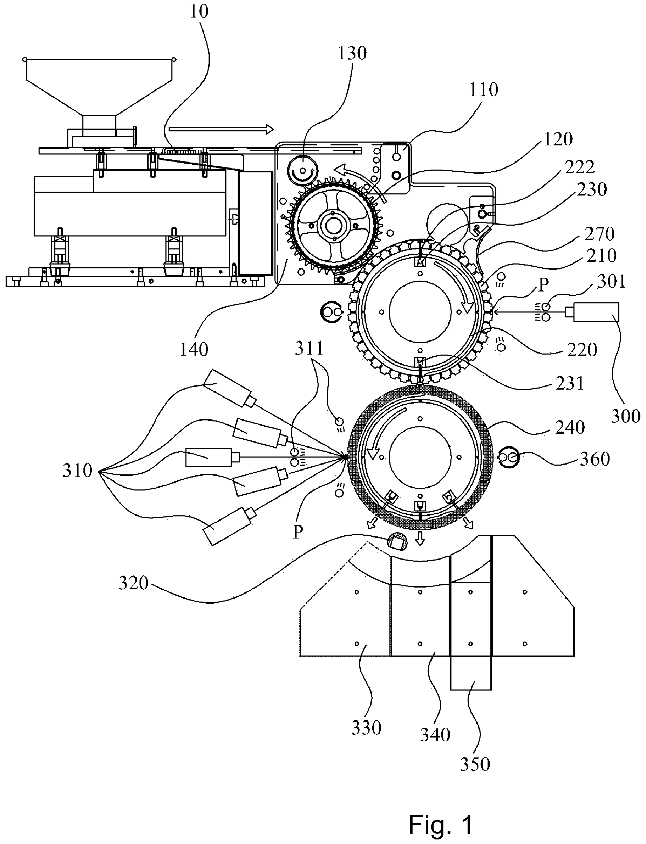

As shown in FIG. 1, an automatic pill inspection apparatus according to an embodiment of the present invention may include a pill feeder 10 supplying pills P, a pill supply unit 100 aligning and transferring the pills P one by one, and a pill alignment and transfer unit 200 for transferring the pills P such that one side surface and the other side surface of the transferred pill P are sequentially exposed.

Meanwhile, for convenience of explanation, medicine having various shapes such as flat cylindrical shapes, disc-like shapes, long cylindrical shapes, or capsules will be referred to as "pills P", and the respective parts of the pill P will be divided into upper side/lower side/side surface in order to consistently express each part.

The pill supply unit 100 for the automatic pill inspection apparatus may serve to supply pills at a certain supply interval such that the pills P are somewhat aligned one by one (i.e., the upper side or the lower side of the pills P are primarily aligned toward a certain direction). In order to achieve the above-mentioned function, the pill supply unit for the automatic pill inspection apparatus includes a supply guide 110 for guiding and supplying the pills P supplied from the pill feeder 10; a sawtooth drum 120 having pill seating grooves 121 receiving the pills P supplied from the supply guide 110 and continuously formed along the outer circumferential surface of the sawtooth drum 120 and rotating in one direction; an alignment brush 130 making contact with the outer surface of the sawtooth drum 120, disposed to rotate in the opposite direction to the rotation direction of the sawtooth drum 120 and pressing the pills P seated in the pill seating groove 121 to allow the pills P to be seated in the pill seating grooves 121 one by one as the sawtooth drum 120 rotates; and a cylindrical guide 140 including a rotation guide part 141 formed to be spaced away from the outer circumferential surface of the sawtooth drum 120 by a certain gap and aligning the pills P under the sawtooth drum 120 such that the pills P face a certain direction when the sawtooth drum 120 rotates, and an induction guide part 142 for guiding the pills P aligned toward the certain direction to an upper drum.

In this case, the pill seating groove 121 may be divided by a sawtooth partition part 122 having a saw-toothed shape. Also, the certain interval of supplying the pills P may be adjusted in accordance with the formation interval of the pill seating groove 121. In the automatic pill inspection apparatus, since the pills P can be supplied at the certain interval as well as aligned so as to face a certain direction, the pills P can be accurately supplied in accordance with the arrangement interval of the pill adsorption seating part 211 formed in the upper drum 210 of the pill alignment and transfer unit 200 for the automatic pill inspection apparatus which is aligned. In this case, the formation interval of the pill seating groove 121 may coincide with the arrangement interval of the pill adsorption seating part 211.

Also, the alignment brush 130 makes contact with the outer surface of the sawtooth drum 120, is disposed to rotate in the opposite direction to the rotation direction of the sawtooth drum 120 and presses the pills P seated in the pill seating groove 121 to allow the pills P to be seated in the pill seating grooves 121 one by one as the sawtooth drum 120 rotates. Simultaneously, the alignment brush 130 performs a function of returning extra pills P that cannot be seated in the pill seating groove 121 to the supplied guide 110.

On the other hand, the cylindrical guide 140 serves to guide and deliver the pills P aligned according to a need of delivering and seating the pills P to the upper side of the upper drum 210. In this case, the cylindrical guide 140 includes a rotation guide part 141 formed to be spaced away from the outer circumferential surface of the sawtooth drum 120 by a certain gap and aligning the pills P under the sawtooth drum 120 such that the pills P face a certain direction when the sawtooth drum 120 rotates, and an induction guide part 142 for guiding the pills P aligned toward the certain direction to the upper drum 210.

The pills P are aligned while the upper side or the lower side of the pills P is adhering closely to the rotation guide part 141 of the cylindrical guide 140. The pills P aligned in a certain direction as such are uniformly aligned and transferred one by one to the pill seating groove 121 of the upper drum 210 by the induction guide part 142.

The sawtooth drum 120 and the cylindrical guide 140 may be configured to combine in one or more rows according to needs. In other words, when a plural row of pills P need to be aligned and supplied at a certain interval at one time, as many pill seating grooves 121 as the plural rows may be formed in the sawtooth drum 120, and the cylindrical guide 140 may also be configured in plural rows.

Hereinafter, the pill alignment and transfer unit 200 for the automatic pill inspection apparatus will be described. The pill alignment and transfer unit 200 for the automatic pill inspection apparatus includes an upper drum 210 including a pill adsorption seating part 211 in which the pills P supplied from the pill supply unit 100 for the automatic pill inspection apparatus one by one while being aligned so as to face a certain direction are adsorbed and seated and which is continuously formed in one or more rows along the outer circumferential surface of the upper drum 210, and separating the pills P from the pill adsorption seating part 211 by compressed air under the upper drum 210; and a lower drum 240 including an inverted table adsorption seating part 241 in which the pills P separated from the lower side of the upper drum 210 are seated such that the undersurfaces of the pills P face the outside, and are seated by being adsorbed by vacuum while being exposed to the outside and which is continuously formed along the outer circumferential surface of the lower drum 240, and selectively separating the pills P from the inverted table adsorption seating part 241 by compressed air under the lower drum 240 while differentiating a separation location.

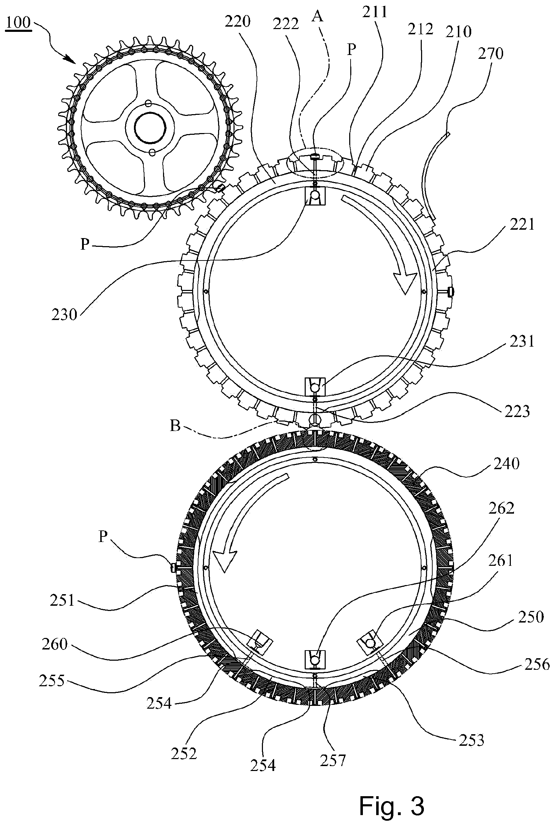

In this case, the upper drum 210 may be implemented in various embodiments that perform the above function. In one embodiment, as shown in FIG. 3, the automatic pill inspection apparatus may further include: a first vacuum application control member 220 disposed closely to the inside of the upper drum 210, including a first side surface vacuum application space part 221 to which vacuum is applied at one side surface thereof, and having a lower compressed air supply hole 223 formed at the lower side of the first side surface vacuum application space part 221; a first vacuum application hole 212 formed in the pill adsorption seating part 211 to communicate with the first side surface vacuum application space part 221; a lower compressed air supply unit 231 supplying compressed air through the lower compressed air supply hole 223 into the first vacuum application hole 212 located at a lower side of the upper drum 210 according to rotation of the upper drum 210 to separate the pills P from the pill adsorption seating part 211.

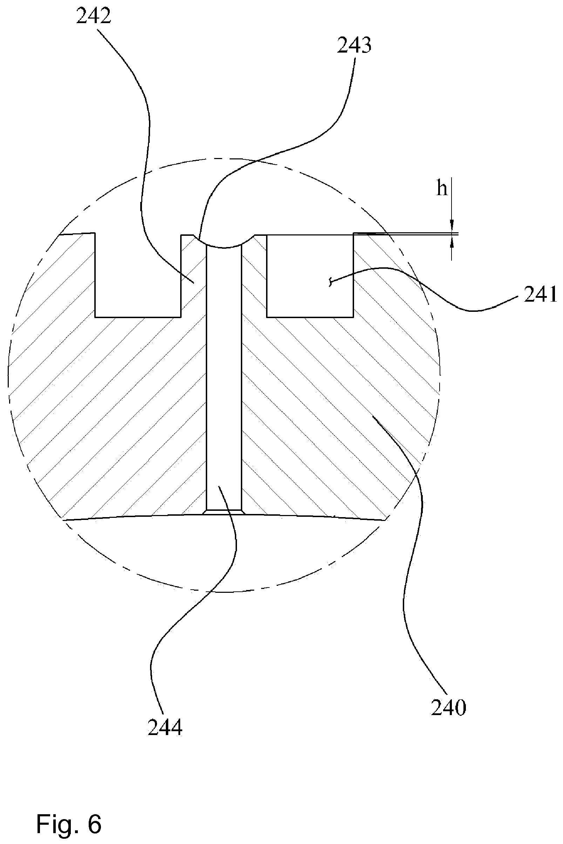

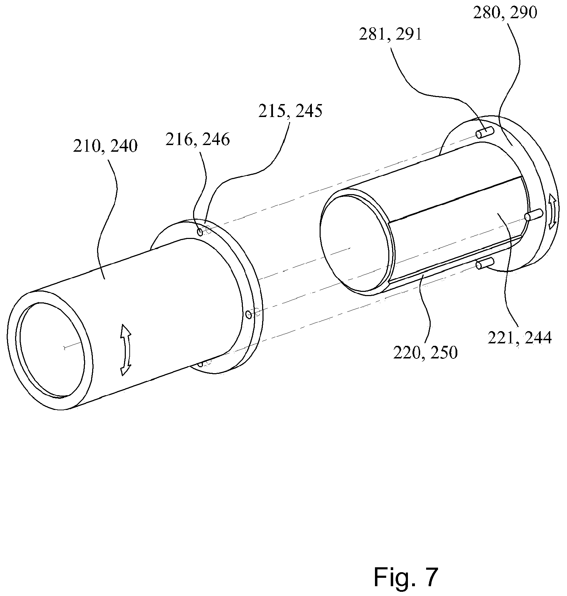

In this case, the upper drum 210 and the lower drum 240 may be replaced and mounted in accordance with the size of the pills P. For this, as shown in FIG. 7, the pill alignment and transfer apparatus for the automatic pill inspection apparatus may include an upper drum driving part 280 disposed on the outer circumferential surface of the first vacuum application control member 220, including a plurality of upper drum drive pins 281 inserted into upper drum drive pin insertion holes 216 formed in an upper drum flange 215 of the upper drum 210, and driving the upper drum 210 that is replaceably installed; and a lower drum driving part 290 disposed on the outer circumferential surface of the second vacuum application control member 250, including a plurality of lower drum drive pins 291 inserted into lower drum drive pin insertion holes 246 formed in a lower drum flange 245 of the lower drum 240, and driving the lower drum 240 that is replaceably installed in linkage with the upper drum 210 in the opposite direction. Thus, various sizes of pills P can be inspected without replacement of the whole inspection apparatus, only by replacing and mounting the upper drum 210 and the lower drum 240 in accordance with the sizes of the pills P. On the other hand, in order to clarify the replacement installation and driving configuration of the upper drum 210 and the lower drum 240, it should be noted that a description of components such as the pill adsorption seating part 211 or the inverted table adsorption seating part 241 irrelevant to the replacement installation and driving of the upper drum 210 and the lower drum 240 is omitted in FIG. 6.

On the other hand, in order to selectively release the pills P after determining whether or not the pill P is defective, as shown in FIG. 1, the automatic pill inspection apparatus further includes: an upper side surface sensing camera 300 disposed at one side of the upper drum 210 to inspect the upper side surface of the pills P; and a post-inversion sensing camera 310 disposed at one side of the lower drum 240 to inspect the lower side surface and the respective side surfaces of the pills P. The pills P determined as defective according to an inspection result of the upper side surface sensing camera 300 and the post-inversion sensing camera 310 are selectively released into a first supplied pill release box 330 by compressed air, and the pills P determined as normal are released into a normal pill release box 350.

In this case, the lower drum 240 may be implemented in various embodiments that can achieve a function of selectively releasing the pills P after determining whether or not the pills P are defective as described above. In one embodiment, as shown in FIG. 3, the automatic pill inspection apparatus may further include: a second vacuum application control member 250 disposed closely to the inside of the lower drum 240, including a second side surface vacuum application space part 251 to which vacuum is applied at one side surface thereof, and having a first compressed air supply hole 255 and a second compressed air supply hole 256 sequentially formed at the lower side of the second side surface vacuum application space part 251; a second vacuum application hole 244 formed in the inverted table adsorption seating part 241 to communicate with the second side surface vacuum application space part 251; a first compressed air supply unit 260 supplying compressed air through the first compressed air supply hole 255 into the second vacuum application hole 244 located at a lower side of the upper drum 210 according to rotation of the upper drum 210 to separate the pills P determined as defective from the inverted table adsorption seating part 241; and a second compressed air supply unit 261 supplying compressed air through the second compressed air supply hole 256 into the second vacuum application hole 244 located at a lower side of the upper drum 210 according to rotation of the upper drum 210 to separate the pills P determined as normal from the inverted table adsorption seating part 241.

On the other hand, in order to prevent the pills P determined as defective from being unseparated and remaining, as shown in FIG. 3, the automatic pill inspection apparatus may further include: a residual pill sensor 320 sensing whether or not the pills P remain in the inverted table adsorption seating part 241 immediately after the pills P determined as defective are separated from the inverted table adsorption seating part 241; a third compressed air supply hole 257 further formed between the first compressed air supply hole 255 and the second compressed air supply hole 256; and a third compressed air supply unit 262 supplying compressed air through the third compressed air supply hole 257 into the second vacuum application hole 244 located at a lower side of the upper drum 210 according to rotation of the upper drum 210 to separate the pills P remaining even though determined as defective from the inverted table adsorption seating part 241.

In order to inspect the undersurface and side surface of the pills P and adsorb the pills P so as to allow the undersurface of the pills P to face the outside while being mostly exposed at the lower drum 240, as shown in FIGS. 3 and 6, the automatic pill inspection apparatus may further include an adsorption seating protrusion 242 disposed inside the inverted table adsorption seating part 241, having the second vacuum application hole 244 formed therein, and having an adsorption groove 243 formed thereon. The adsorption groove 243 has a function of allowing the pills P to be stably adsorbed onto the adsorption seating protrusion 242. In this case, like "h" of FIG. 6, the upper side of the adsorption seating protrusion 242 may be formed flat at an inner side from the outer circumferential surface of the lower drum 240 by about 0.05 mm to about 0.3 mm.

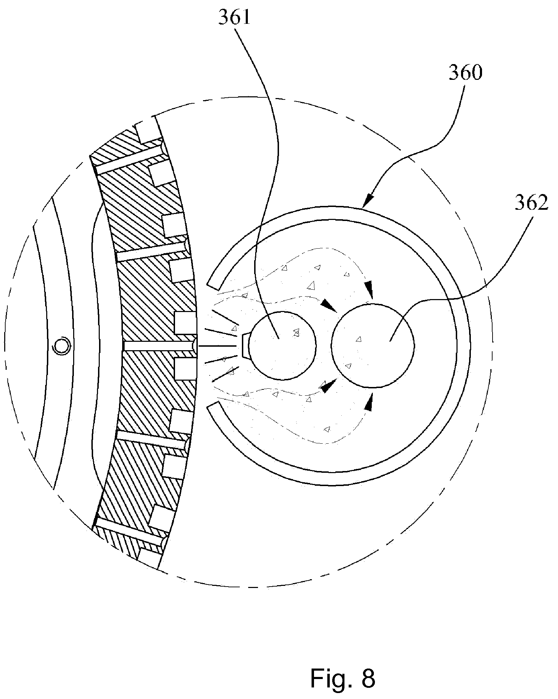

Also, in order to remove residues from the surface of the lower drum 240 after the pills P are separated, as shown in FIG. 1, the automatic pill inspection apparatus may further include a drum cleaning unit 360 disposed closely to the other side of the lower drum 240 and removing residues by spraying compressed air on the surface of the lower drum 240 from which the pills P are separated. In this case, in order to prevent residues from scattering in a form of dust inside the apparatus and efficiently remove dust generated in the apparatus during the operation, as shown in FIG. 8, the drum cleaning unit 360 may include a compressed air outlet part 361 removing residues by spraying compressed air on the surface of the lower drum 240 from which the pills P are separated; and a suction part 362 for sucking residues removed by compressed air sprayed from the compressed air outlet part 361 using vacuum.

In order to allow the pills P to be aligned to a correct location once again when the pills P are first seated in the pill adsorption seating part 211 from the upper side of the upper drum 210, as shown in FIG. 3, the automatic pill inspection apparatus according to an embodiment of the present invention may further include an upper compressed air supply hole 222 formed on the first vacuum application control member 220; and an upper compressed air supply unit 230 supplying compressed air into the second vacuum application hole 244 through the upper compressed air supply hole 222 to align the pills P in the pill adsorption seating part 211.

Also, the automatic pill inspection apparatus may further include an alignment guide 270 disposed over the side surface of the upper drum 210 to make contact with and press the pills P.

In this case, similarly to a typical inspection apparatus, the post-inversion sensing camera 310 further includes a lower side surface sensing camera disposed at one side of the lower drum 240 to inspect the lower side surface of the pills P; an upper side surface sensing camera disposed at an upper side of one side of the lower drum 240 to inspect the upper side surface of the pills P; and a lower side surface sensing camera disposed at a lower side of one side of the lower drum 240 to inspect the lower side surface of the pills P.

However, a typical inspection apparatus is configured to include cameras disposed at the front and rear of one side surface of the lower drum 240, respectively. Accordingly, when the front side surface and the rear side surface of the pills P are simultaneously inspected, there is no limitation when the pills P pass in one row. However, when the pills P are arranged in a straight line from the front side to the rear side while forming two or more rows for quicker inspection like in the present invention, the pills P cover each other, making it impossible to perform inspection.

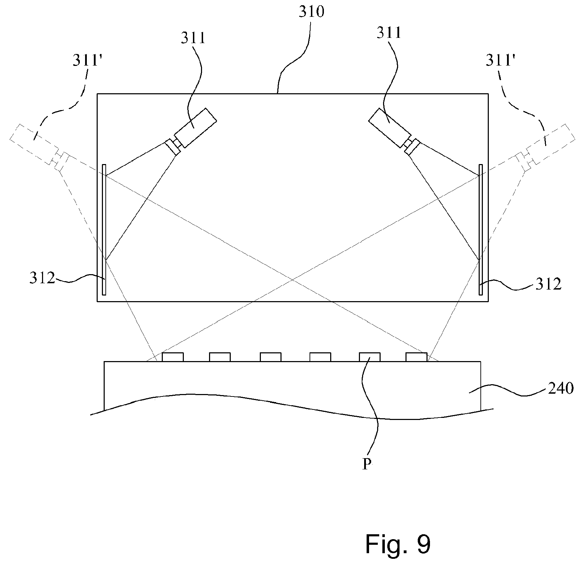

In order to overcome this limitation, as shown in FIG. 9, the post-inversion sensing camera 310 may include a side surface sensing camera 311' disposed in forward and backward directions at one side of the lower drum 240 such that all images of the pills P are arranged and seated straight while forming a row with respect to view angles thereof, and are returned without being overlapped.

As configured above, when the side surface sensing camera 311' is included, the width of the post-inversion sensing camera 310 may unnecessarily become larger than the width of the lower drum 240. Accordingly, there is a limitation in that the front-to-rear width of the whole apparatus has to be largely manufactured. In order to prevent this, as shown as the solid line in FIG. 9, the post-inversion sensing camera 310 may further include a side surface sensing camera 311 disposed such that all images of the pills P are arranged and seated straight while forming a row with respect to view angles thereof, and are returned through a reflector 312 without being overlapped. In this case, as shown in FIG. 9, since the width of the post-inversion sensing camera 310 can be configured to be approximately equal to the width of the lower drum 240, a limitation that the whole apparatus needs to have a large front-to-rear width can be overcome.

As described above, optimal embodiments have been disclosed in the drawings and the specification. Although specific terms have been used herein, these are only intended to describe the present invention and are not intended to limit the meanings of the terms or to restrict the scope of the present invention as disclosed in the accompanying claims. Therefore, those skilled in the art will appreciate that various modifications and other equivalent embodiments are possible from the above embodiments. Therefore, the scope of the present invention should be defined by the technical spirit of the accompanying claims.

## Claims

1. An automatic pill inspection apparatus comprising:
a pill feeder (10) supplying pills (p);
a pill supply unit (100) for the automatic pill inspection apparatus, aligning and transferring the pills (p) supplied from the pill feeder (10) one by one; and
a pill alignment and transfer unit (200) for the automatic pill inspection apparatus, determining and transferring the pills (p) such that one side surface and the other side surface of the pill (p) are sequentially exposed,
wherein:
the pill supply unit (100) for the automatic pill inspection apparatus comprises:
a supply guide (110) for guiding and supplying the pills (p) supplied from the pill feeder (10);
a sawtooth drum (120) having pill seating grooves (121) receiving the pills (p) supplied from the supply guide (110) and continuously formed in one or more rows along an outer circumferential surface of the sawtooth drum (120);
an alignment brush (130) making contact with an outer surface of the sawtooth drum (120) and pressing the pills (p) seated in the pill seating groove (121) to allow the pills (p) to be seated in the pill seating grooves (121) one by one as the sawtooth drum (120) rotates; and
a cylindrical guide (140) comprising a rotation guide part (141) formed to be spaced away from the outer circumferential surface of the sawtooth drum (120) by a certain gap and aligning the pills (p) under the sawtooth drum (120) such that the pills (p) face a certain direction when the sawtooth drum (120) rotates, and an induction guide part (142) for guiding the pills (p) aligned toward the certain direction to an upper drum;
the pill alignment and transfer unit (200) for the automatic pill inspection apparatus comprises:
an upper drum (210) comprising a pill adsorption seating part (211) in which the pills (p) supplied from the pill supply unit (100) for the automatic pill inspection apparatus one by one while being aligned so as to face a certain direction are adsorbed and seated and which is continuously formed in one or more rows along the outer circumferential surface of the upper drum (210), and separating the pills (p) from the pill adsorption seating part (211) by compressed air under the upper drum (210); and
a lower drum (240) comprising an inverted table adsorption seating part (241) in which the pills (p) separated from the lower side of the upper drum (210) are seated such that the undersurfaces of the pills (p) face the outside, and are seated by being adsorbed by vacuum while being exposed to the outside and which is continuously formed along the outer circumferential surface of the lower drum (240), and selectively separating the pills (p) from the inverted table adsorption seating part (241) by compressed air under the lower drum (240) while differentiating a separation location;
the automatic pill inspection apparatus further comprises:
an upper side surface sensing camera (300) disposed at one side of the upper drum (210) to inspect the upper side surface of the pills (p); and
a post-inversion sensing camera (310) disposed at one side of the lower drum (240) to inspect the lower side surface and the respective side surfaces of the pills (p); and
the pills (p) determined as defective according to an inspection result of the upper side surface sensing camera (300) and the post-inversion sensing camera (310) are selectively released into a first supplied pill release box (330) by compressed air, and the pills (p) determined as normal are released into a normal pill release box (350).

2. The automatic pill inspection apparatus of claim 1, wherein the post-inversion sensing camera (310) further comprises:
a lower side surface sensing camera disposed at one side of the lower drum (240) to inspect the lower side surface of the pills (p);
an upper side surface sensing camera disposed at an upper side of one side of the lower drum (240) to inspect the upper side surface of the pills (p);
a lower side surface sensing camera disposed at a lower side of one side of the lower drum (240) to inspect the lower side surface of the pills (p); and
a side surface sensing camera (311) disposed in forward and backward directions at one side of the lower drum (240) such that all images of the pills (p) are arranged and seated straight while forming a row with respect to view angles thereof, and are returned through a reflector (312) without being overlapped.

3. The automatic pill inspection apparatus of claim 2, further comprising:
a first vacuum application control member (220) disposed closely to the inside of the upper drum (210), comprising a first side surface vacuum application space part (221) to which vacuum is applied at one side surface thereof, and having a lower compressed air supply hole (223) formed at the lower side of the first side surface vacuum application space part (221);
a first vacuum application hole (212) formed in the pill adsorption seating part (211) to communicate with the first side surface vacuum application space part (221);
a lower compressed air supply unit (231) supplying compressed air through the lower compressed air supply hole (223) into the first vacuum application hole (212) located at a lower side of the upper drum (210) according to rotation of the upper drum (210) to separate the pills (p) from the pill adsorption seating part (211);
a second vacuum application control member (250) disposed closely to the inside of the lower drum (240), comprising a second side surface vacuum application space part (251) to which vacuum is applied at one side surface thereof, and having a first compressed air supply hole (255) and a second compressed air supply hole (256) sequentially formed at the lower side of the second side surface vacuum application space part (251);
a second vacuum application hole (244) formed in the inverted table adsorption seating part (241) to communicate with the second side surface vacuum application space part (251);
a first compressed air supply unit (260) supplying compressed air through the first compressed air supply hole (255) into the second vacuum application hole (244) located at a lower side of the upper drum (210) according to rotation of the upper drum (210) to separate the pills (p) determined as defective from the inverted table adsorption seating part (241); and
a second compressed air supply unit (261) supplying compressed air through the second compressed air supply hole (256) into the second vacuum application hole (244) located at a lower side of the upper drum (210) according to rotation of the upper drum (210) to separate the pills (p) determined as normal from the inverted table adsorption seating part (241),
wherein the upper drum (210) and the lower drum (240) are replaced and mounted in accordance with the size of the pills (p), and
the automatic pill inspection apparatus further comprises:
an upper drum driving part (280) disposed on the outer circumferential surface of the first vacuum application control member (220), comprising a plurality of upper drum drive pins (281) inserted into upper drum drive pin insertion holes (216) formed in an upper drum flange (215) of the upper drum (210), and driving the upper drum (210) that is replaceably installed; and
a lower drum driving part (290) disposed on the outer circumferential surface of the second vacuum application control member (250), comprising a plurality of lower drum drive pins (291) inserted into lower drum drive pin insertion holes (246) formed in a lower drum flange (245) of the lower drum (240), and driving the lower drum (240) that is replaceably installed in linkage with the upper drum (210) in the opposite direction.

4. The automatic pill inspection apparatus of claim 3, further comprising:
a residual pill sensor (320) sensing whether or not the pills (p) remain in the inverted table adsorption seating part (241) immediately after the pills (p) determined as defective are separated from the inverted table adsorption seating part (241);
a third compressed air supply hole (257) further formed between the first compressed air supply hole (255) and the second compressed air supply hole (256); and
a third compressed air supply unit (262) supplying compressed air through the third compressed air supply hole (257) into the second vacuum application hole (244) located at a lower side of the upper drum (210) according to rotation of the upper drum (210) to separate the pills (p) remaining even though determined as defective from the inverted table adsorption seating part (241).

5. The automatic pill inspection apparatus of claim 4, further comprising an adsorption seating protrusion (242) disposed inside the inverted table adsorption seating part (241), having the second vacuum application hole (244) formed therein, and having an adsorption groove (243) formed thereon,
wherein the upper side of the adsorption seating protrusion (242) is formed flat at an inner side from the outer circumferential surface of the lower drum (240) by about 0.05 mm to about 0.3 mm.

6. The automatic pill inspection apparatus of claim 5, further comprising a drum cleaning unit (360) disposed closely to the other side of the lower drum (240) and removing residues by spraying compressed air on the surface of the lower drum (240) from which the pills (p) are separated,
wherein the drum cleaning unit (360) comprises:
a compressed air outlet part (361) removing residues by spraying compressed air on the surface of the lower drum (240) from which the pills (p) are separated; and
a suction part (362) for sucking residues removed by compressed air sprayed from the compressed air outlet part (361) using vacuum.

7. The automatic pill inspection apparatus of claim 6, further comprising:
an upper compressed air supply hole (222) formed on the first vacuum application control member (220); and
an upper compressed air supply unit (230) supplying compressed air into the second vacuum application hole (244) through the upper compressed air supply hole (222) to align the pills (p) in the pill adsorption seating part (211).

8. The automatic pill inspection apparatus of claim 7, further comprising an alignment guide (270) disposed over the side surface of the upper drum (210) to make contact with and press the pills (p).
